Europäisches Patentamt

European Patent Office

Office européen des brevets

(19)

(11) **EP 1 116 014 B1**

(12) **EUROPÄISCHE PATENTSCHRIFT**

(45) Veröffentlichungstag und Bekanntmachung des Hinweises auf die Patenterteilung:
**06.08.2003 Patentblatt 2003/32**

(21) Anmeldenummer: **99969490.4**

(22) Anmeldetag: **09.09.1999**

(51) Int Cl.$^7$: **G01L 3/00**, H02P 21/00

(86) Internationale Anmeldenummer:
**PCT/DE99/02858**

(87) Internationale Veröffentlichungsnummer:
**WO 00/017616 (30.03.2000 Gazette 2000/13)**

(54) **VERFAHREN UND EINRICHTUNG ZUM BESTIMMEN DES DREHMOMENTES EINER INDUKTIONSMASCHINE**

METHOD AND DEVICE FOR DETERMINING THE TORQUE OF AN INDUCTION MACHINE

PROCEDE ET DISPOSITIF POUR DETERMINER LE COUPLE D'UNE MACHINE INDUCTIVE

(84) Benannte Vertragsstaaten:
**AT BE CH CY DE DK ES FI FR GB GR IE IT LI LU MC NL PT SE**

(30) Priorität: **21.09.1998 DE 19843134**

(43) Veröffentlichungstag der Anmeldung:
**18.07.2001 Patentblatt 2001/29**

(73) Patentinhaber: **SIEMENS AKTIENGESELLSCHAFT**
**80333 München (DE)**

(72) Erfinder:
 • **GRIEPENTROG, Gerd**
 **D-91058 Erlangen (DE)**
 • **RUNGGALDIER, Diethard**
 **D-96135 Stegaurach (DE)**

(56) Entgegenhaltungen:
**DE-A- 19 532 477**

 • **HURST K D ET AL: "ZERO-SPEED TACHO-LESS I.M. TORQUE CONTROL: SIMPLY A MATTER OF STATOR VOLTAGE INTEGRATION" APEC. ANNUAL APPLIED POWER ELECTRONICS CONFERENCE AND EXPOSITION,US,NEW YORK, IEEE, Bd. CONF. 12, 1997, Seiten 749-753, XP000731025 ISBN: 0-7803-3705-0**

**Beschreibung**

Die Erfindung bezieht sich auf ein Verfahren zum Bestimmen des Drehmomentes einer Induktionsmaschine, wobei aus den Statorklemmenspannungen und den Statorklemmenströmen durch Integration und anschließende Hochpaßfilterung ein gefilterter und somit gleichanteilsfreier Raumzeiger des verketteten Statorflusses ermittelt wird. Daneben bezieht sich die Erfindung auf eine zugehörige Einrichtung zur Durchführung des Verfahrens, mit einer Meßeinrichtung zum Erfassen der Statorklemmenspannungen und der Statorklemmenströme und mit einer Recheneinrichtung zur Ermittlung eines gefilterten Raumzeigers des verketteten Statorflusses.

Für Antriebsaufgaben mit Induktionsmaschinen ist die Kenntnis des durch die Induktionsmaschine entwik-kelten Drehmomentes von Bedeutung, da erst bei Vorliegen einer solchen Kenntnis eine gezielte Regelung des Drehmoments der Induktionsmaschine möglich ist. Beispielsweise sind aus der DE 42 29 554 C2 sowie der JP 56-79223 A Einrichtungen zur Bestimmung des Drehmomentes in derartigen Induktionsmaschinen bekannt, wobei das Drehmoment mittels elektronischer Bauelemente in einer sogenannten Rechenschaltung gebildet wird. In beiden Patentschriften werden zur Unterdrückung von Gleichanteilen bei der Bestimmung des verketteten Statorflusses elektronisch realisierte Hochpassfilter eingesetzt.

Aus der EP 0 621 680 A1 ist eine indirekte Drehmomentregelung bekannt, bei der die Wirkleistung in mindestens einem der drei Phasen auf einen konstanten Wert geregelt wird. Nachteilig ist hierbei, daß keine direkte Beziehung zwischen Wirkleistung und Drehmoment angebbar ist, so daß mit dem bekannten Verfahren zwangsläufig das Drehmoment nur ungenau geregelt werden kann.

Ein weiteres Verfahren zur Bestimmung des Drehmomentes aus dem verketteten Statorfluß und dem Statorstrom, d.h. aus der Messung rein elektrischer Größen und somit ohne Verwendung eines separaten Drehmomentsensors, ist beispielsweise in der DE 195 32 477 A1 offenbart. Ziel ist es hierbei, durch eine Regelung ein Drehmoment von 0 zu erzielen, indem Ständer- und Läuferfluß synchronisiert werden. In diesem Fall läuft der Raumzeiger des verketteten Statorflusses mit Rotor-Winkelgeschwindigkeit um, so daß die Drehzahl der Maschine indirekt aus der Grundfrequenz der speisenden Frequenzumrichter-Spannung ermittelt werden kann. Die zitierte Schrift beschreibt allerdings nicht, wie der verkettete Statorfluß bestimmt wird, ohne daß zwangsläufig bei Meßwertaufnahme und -verarbeitung auftretende Fehler kumulieren und zu nicht tolerierbaren Abweichungen bei der Bestimmung des Drehmomentes führen.

Der Erfindung liegt nun die Aufgabe zugrunde, ein möglichst einfaches und genaues Verfahren zur Bestimmung des durch die Induktionsmaschine entwickelten Drehmoments nur unter Verwendung elektrischer Größen anzugeben, bei dem die durch numerische Integration und notwendige Hochpaßfilterung verursachten Fehler weitgehend korrigiert werden.

Außerdem liegt der Erfindung die Aufgabe zugrunde, eine Einrichtung zum Durchführen des Verfahrens anzugeben.

Die erstgenannte Aufgabe wird gemäß der Erfindung durch ein Verfahren mit den Merkmalen des Patentanspruches 1 gelöst. Bei dem erfindungsgemäßen Verfahren zum Bestimmen des Drehmomentes einer Induktionsmaschine wird aus den Statorklemmenspannungen und den Statorklemmenströmen durch numerische Integration und anschließende Hochpaßfilterung ein gefilterter Raumzeiger des verketteten Statorflusses ermittelt, und aus diesem nach Multiplikation mit einem komplexen Korrekturfaktor das Drehmoment berechnet. Durch die Multiplikation mit dem komplexen Korrekturfaktor werden die durch numerische Integration und Hochpaßfilterung hervorgerufenen, jeweils auf die Grundwelle der Netzspannung bezogenen Amplituden- und Phasenfehler korrigiert, so daß ein in Bezug auf die Grundwelle der Netzspannung hinsichtlich Amplitude und Phase exakter Wert der Flußverkettung errechnet wird.

Die genannten Aufgaben sind erfindungsgemäß bei einem Verfahren der eingangs genannten Art dadurch gelöst, daß der Raumzeiger mit einem komplexen Korrekturfaktor multipliziert und nach der Multiplikation mit dem Korrekturfaktor das Drehmoment berechnet wird. Bei der zugehörigen Einrichtung ist eine Recheneinrichtung vorhanden, mit der außer der Ermittlung des gefilterten Raumzeigers unmittelbar dessen Multiplikation mit einem komplexen Korrekturfaktor erfolgt und gleichermaßen die Berechnung des Drehmomentes aus dem mit dem komplexen Korrekturfaktor multiplizierten gefilterten Raumzeiger möglich ist.

Durch die Hochpaßfilterung können Fehler kompensiert werden, die einerseits bei der Messung der Strom- und Spannungswerte auftreten und die sich andererseits aus der Tatsache ergeben, daß aufgrund der sich je nach Betriebsbedingungen ändernden Temperatur der zur Berechnung des Statorflusses erforderliche Wert des ohmschen Widerstandes der Statorwicklung nicht exakt bekannt ist. Außerdem wird durch die Hochpaßfilterung ein Restfehler bei der Integration ausgeglichen, so daß eine bleibende Abweichung bzw. ein Abdriften des berechneten verketteten Statorflusses vermieden ist, die zu einem bleibenden bzw. wachsenden Fehler bei der Bestimmung des Drehmomentes führen würde.

In einer vorteilhaften Ausgestaltung des erfindungsgemäßen Verfahrens werden im einzelnen folgende Schritte ausgeführt:

a) Die Statorklemmenspannungen und die Statorklemmenströme werden in vorgegebenen Zeitabschnitten gemessen,

b) aus den Meßwerten der Statorklemmenspannungen und der Statorklemmenströme werden der Raumzeiger der Statorspannung bzw. der Raumzeiger des Statorstromes berechnet,

c) aus dem Raumzeiger der Statorspannung und dem Raumzeiger des Statorstromes und einem Ausgangswert für den Raumzeiger des verketteten Statorflusses wird durch numerische Integration ein ungefilterter Raumzeiger des verketteten Statorflusses ermittelt,

d) der ungefilterte Raumzeiger des verketteten Statorflusses wird zur Hochpaßfilterung mit einem vorgegebenen Filterfaktor multipliziert,

e) der auf diese Weise ermittelte gefilterte Raumzeiger des verketteten Statorflusses wird als Ausgangswert für den folgenden numerischen Integrationsschritt verwendet und

f) zur Berechnung des aktuellen Drehmomentes der Induktionsmaschine mit einem komplexen Korrekturfaktor multipliziert.

In dieser Ausgestaltung des Verfahrens wird somit ein numerisches Integrationsverfahren zur Bestimmung des verketteten Flusses aus in vorgegebenen Zeitabständen abgetasteten Stromund Spannungssignalen angewendet.

In einer bevorzugten Ausgestaltung der Erfindung enthält die Recheneinrichtung eine erste Recheneinheit zum Berechnen und zum Speichern des Raumzeigers der Statorspannung und des Raumzeigers des Statorstromes, eine zweite Recheneinheit zur Berechnung des Raumzeigers des verketteten Statorflusses durch numerische Integration aus den gespeicherten Raumzeigern der Statorspannung und des Statorstromes und aus einem in einem Speicher gespeicherten Ausgangswert für den Raumzeiger des verketteten Statorflusses, eine nachgeschaltete dritte Recheneinheit zur Multiplikation des berechneten Raumzeigers des verketteten Statorflusses mit einem Filterfaktor, und eine vierte Recheneinheit zum Berechnen des Drehmoments aus dem Raumzeiger des Statorstroms, dem Raumzeiger des verketteten korrigierten Statorflusses, der Polzahl und einem Korrekturfaktor, wobei der gefilterte Raumzeiger des verketteten Statorflusses an den Eingang des Ausgangswertspeichers geführt ist.

In einer weiteren vorteilhaften Ausgestaltung der Erfindung ist eine Steuereinrichtung zum Steuern des Drehmomentes der Induktionsmaschine in Abhängigkeit vom am Ausgang der vierten Recheneinrichtung anstehenden Istwert fürs Drehmoment vorgesehen.

Ausgangspunkt der Erfindung ist die beispielsweise auch in der DE 195 32 477 als Grundlage für die dort offenbarte Motorsteuerung verwendete Gleichung (1), die eine Berechnung des Drehmoments aus dem verketteten Statorflusses und dem Statorstrom ermöglicht:

$$m = \frac{3}{2} \cdot p \cdot \left( \Psi^{\angle} \times \mathbf{i}^{\angle} \right) \qquad \text{.} \qquad\qquad\qquad (1)$$

m - Drehmoment

p - Zahl der Polpaare

$\Psi^{\angle}$ - Raumzeiger des verketteten Statorflusses, bezogen auf das Stator-Koordinatensystem

$\mathbf{i}^{\angle}$ - Raumzeiger des Statorstromes

$\times$ - Operator mit

$$z_1^{\angle} \times z_2^{\angle} = \mathrm{Re}\left\{z_1^{\angle}\right\} \cdot \mathrm{Im}\left\{z_2^{\angle}\right\} - \mathrm{Im}\left\{z_1^{\angle}\right\} \cdot \mathrm{Re}\left\{z_2^{\angle}\right\}$$

Während der Raumzeiger $\mathbf{i}^{\angle}$ des Statorstromes aus den meßbaren Statorklemmenströmen $i_{1,2,3}$ mit Hilfe bekannter Koordinatentransformationen direkt bestimmt werden kann, muß der Raumzeiger $\Psi^{\angle}$ des verketteten Statorflusses indirekt aus den Klemmenspannung $u_{1,2,3}$ und den Statorklemmenströmen $i_{1,2,3}$ ermittelt werden.

Für die zeitliche Ableitung des Raumzeigers $\Psi^{\angle}$ des verketteten Statorflusses gilt:

$$\frac{d\Psi^{\angle}}{dt} = u^{\angle} - R \cdot i^{\angle} \qquad\qquad\qquad (2)$$

$u^{\angle}$ - Raumzeiger der Statorspannung

R - ohmscher Widerstand von Statorwicklung und Zuleitungen

Der in Gleichung (2) enthaltene Widerstand R ist entweder als Parameter der Induktionsmaschine bekannt bzw. an der Maschine meßbar.

Durch Integration folgt schließlich der Raumzeiger des verketteten Statorflusses der Induktionsmaschine zu:

$$\Psi^{\angle} = \int_{t=0}^{t} \left( \mathbf{u}^{\angle} - R \cdot \mathbf{i}^{\angle} \right) dt \qquad (3)$$

Für eine ideale Induktionsmaschine am symmetrischen, oberwellenfreien Drehstromnetz beschreibt die Flußverkettung nach Abklingen transienter Vorgänge in der komplexen Zahlenebene einen mit Netzfrequenz umlaufenden Kreis, dessen Mittelpunkt mit dem Nullpunkt zusammenfällt. Wird die Maschine an Frequenzumrichtern oder Drehstromstellern (Softstarter) betrieben, läuft der Flußverkettungsraumzeiger mit der Frequenz der Grundwelle um, wobei sich vorhandene Oberwellen in Schwankungen um die Kreisform äußern.

Der Vorteil einer Drehmomentbestimmung nach den Gleichungen (1),(2) und (3) besteht insbesondere darin, daß außer dem leicht bestimmbaren Widerstand R und der bekannten Polpaarzahl p keinerlei Informationen über die Induktionsmaschine notwendig sind.

Die gemäß Gleichung (4) erforderliche Integration wird nun vorzugsweise numerisch durchgeführt, beispielsweise bei äquidistanter Abtastung nach der Trapezregel:

$$\hat{\Psi}_k^{\angle} = \Psi_{k-1}^{\angle} + \frac{\Delta t}{2} \cdot \left( \frac{d\Psi_k^{\angle}}{dt} + \frac{d\Psi_{k-1}^{\angle}}{dt} \right) \qquad (4)$$

$\Psi_{k-1}^{\angle}$ - errechneter (gefilterter) Raumzeiger des verketteten Statorflusses zum Abtastschritt k-1
$\hat{\Psi}_k^{\angle}$ - ungefilterter Raumzeiger des verketteten Statorflusses zum Abtastschritt k
$\Delta t$ - Abtastschrittweite

Die zeitlichen Ableitungen $\frac{d\Psi^{\angle}}{dt}_k$, $\frac{d\Psi^{\angle}}{dt}_{k-1}$ des Raumzeigers $\Psi_{k,k-1}^{\angle}$ des verketteten Statorflusses zu den Abtastschritten k und k-1 werden dabei unmittelbar aus den zu diesen Abtastschritten gehörenden Raumzeigern $\mathbf{u}_{k,k-1}^{\angle}$, $\mathbf{i}_{k,k-1}^{\angle}$ der Statorklemmenspannung und des Statorklemmenstromes gemäß Gleichung (2) ermittelt.

Wie vorstehend bereits erläutert, kommt es ohne weitere Maßnahmen wegen unvermeidlicher Fehler bei der Messung der Strom- und Spannungswerte, des nicht exakt bekannten Widerstandes R (Einfluß der Temperatur) und des bei numerischen Integrationsverfahren verbleibenden Restfehlers zu einer bleibenden Abweichung bzw. zu einem Abdriften des errechneten verketteten Statorflusses, was sich in einer Verlagerung des Flußverkettungskreises aus dem Nullpunkt der komplexen Zahlenebene äußert. Letztlich würde dies einen bleibenden bzw. wachsenden Fehler bei der Bestimmung des Drehmomentes hinterlassen.

Um diese unerwünschten Effekte weitgehend zu eliminieren, wird nun gemäß der Erfindung der numerisch bestimmte Raumzeiger des verketteten Statorflusses einer Hochpaßfilterung unterzogen. Im Falle eines numerischen Integrationsverfahrens geschieht dies durch Multiplikation des errechneten Raumzeigers des verketteten Statorflusses zu jedem Abtastschritt mit einem Filterfaktor η, wobei η wenig kleiner als 1 ist:

$$\Psi_k^{\angle} = \eta \cdot \left[ \Psi_{k-1}^{\angle} + \frac{\Delta t}{2} \cdot \left( \frac{d\Psi_k^{\angle}}{dt} + \frac{d\Psi_{k-1}^{\angle}}{dt} \right) \right] \qquad (5)$$

η - Filterfaktor zur Realisierung eines Hochpasses

Der auf diese Weise gewonnene gefilterte Raumzeiger $\Psi_k^{\angle}$ für den verketteten Statorfluß wird dann in einem nächsten Schritt k+1 für die Berechnung des ungefilterten Raumzeigers $\Psi_{k+1}^{\angle}$ gemäß Gleichung (4) herangezogen.

Für die Bemessung des Filterfaktors η kann Gleichung (6) herangezogen werden, wobei τ eine Filterzeitkonstante ist, die vorzugsweise das 1- bis 10-fache der Netzperiode beträgt.

$$\eta = \exp\left(-\frac{\Delta t}{\tau}\right) \qquad (6)$$

$\tau$ - Filterzeitkonstante

Für den Betrieb an einem Drehstromnetz mit der beliebigen Grundwellen-Kreisfrequenz $\omega$ besteht nach Abklingen transienter Störungen zwischen der Grundwelle des nach Gleichung (5) errechneten Raumzeigers des verketteten Statorflusses (Flußverkettung) und der tatsächlichen, in der Induktionsmaschine vorliegenden Grundwelle der Flußverkettung eine konstante Abweichung sowohl in der Amplitude als auch in der Phasenlage (Winkel in der komplexen Zahlenebene), die im folgenden als Grundwellen-Fehler der Flußverkettung bezeichnet wird. Dabei ist es gleichgültig, ob die Induktionsmaschine direkt vom Drehstromnetz, von einem Softstarter bzw. Drehstromsteller, einem Frequenzumrichter oder anderen Steuergeräten gespeist wird.

Der konstante Grundwellen-Fehler wird nun durch Multiplikation der nach Gleichung (5) errechneten Flußverkettung mit einem konstanten, komplexen Korrekturfaktor $C^{\angle}$ kompensiert, so daß für die Berechnung des Drehmomentes m in Abwandlung von Gleichung (1) nachfolgende Beziehung angewendet wird:

$$m_k = \frac{3}{2}\cdot p \cdot (C^{\angle} \cdot \Psi_k^{\angle} \times i_k^{\angle}) \qquad (7)$$

$C^{\angle}$- komplexer Korrekturfaktor zur Kompensation von Fehlern.

Der Korrekturfaktor $C^{\angle}$ ergibt sich bei Anwendung der Integrationsvorschrift gemäß Gleichung (5) zu:

$$C^{\angle} = \frac{\frac{(\eta+1)\cdot\sin\beta}{\cos\beta+1}+j\cdot-\eta-1)}{\eta\cdot\beta} \text{ mit } \beta = \omega\cdot\Delta t \qquad (8)$$

$\omega$ - Kreisfrequenz der Grundwelle, auf welche der Korrekturfaktor $C^{\angle}$ abgestimmt ist

Bei Anwendung anderer numerischer Integrationsverfahren als in Gleichung (5) dargelegt muß der komplexe Korrekturfaktor $C^{\angle}$ entsprechend angepaßt werden.

Zur weiteren Erläuterung der Erfindung wird auf die Zeichnung verwiesen. Es zeigen:

FIG 1      eine Einrichtung zur Durchführung des erfindungsgemäßen Verfahrens als Blockschaltbild mit einem Signalflußgraph,

FIG 2      ein Diagramm in dem das gemäß der Erfindung berechnete Drehmoment gegen das tatsächliche Drehmoment während des Anlaufvorganges einer 30 kW-Induktionsmaschine gegen die Zeit aufgetragen sind.

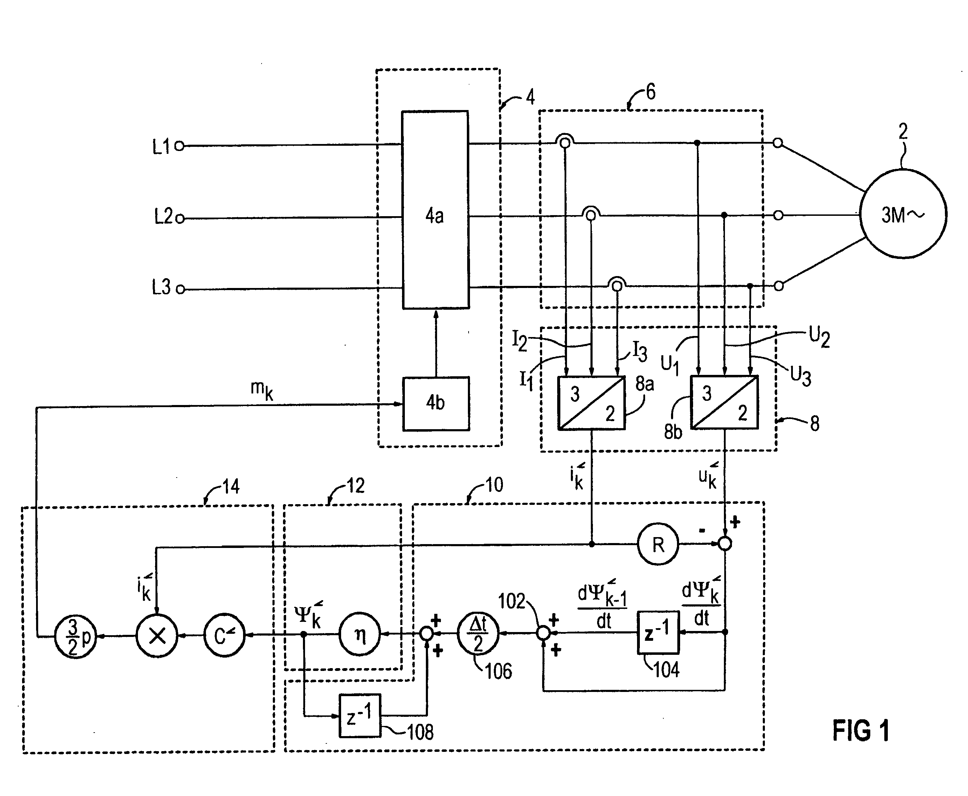

Im Ausführungsbeispiel gemäß FIG 1 ist eine Induktionsmaschine 2 über eine Steuereinrichtung 4 mit ihrem Ständer (Stator) an die Phasen L1,L2,L3 eines dreiphasigen Netzes angeschlossen. Mit Hilfe einer Meßeinrichtung 6 werden sowohl die in den Wicklungen des Stators der Induktionsmaschine 2 jeweils fließenden Statorklemmenströme $i_1, i_2, i_3$ als auch die an den Klemmen des Stators anliegenden Statorklemmenspannungen $u_1, u_2, u_3$ gemessen und an eine erste Recheneinheit 8 weitergeleitet.

Die erste Recheneinheit 8 enthält im Ausführungsbeispiel einen nicht im einzelnen dargestellten Analog-Digital-Wandler, in dem die Meßwerte für die Statorklemmenströme und die Statorklemmenspannungen mit einer vorgegebenen Abtastrate digitalisiert werden, so daß die korrespondierenden digitalen Meßwerte in zueinander äquidistanten Zeitabschnitten $\Delta t$ vorliegen. Die erste Recheneinheit enthält Transformationseinheiten 8a und 8b, in denen aus den Statorklemmenströmen $i_1, i_2, i_3$ und Statorklemmenspannungen $u_1, u_2, u_3$ die jeweils zugehörigen Raumzeiger $u_k^{-}$, $i_k^{-}$ der Statorspannung bzw. des Statorstromes zum Abtastschritt k berechnet werden und stehen in diskreten Zeitabständen $\Delta t$ am Ausgang der ersten Recheneinheit 8 an.

In einer der ersten Recheneinheit 8 nachgeschalteten zweiten Recheneinheit 10 werden nun aus den Raumzeigern $u_k^{\angle}$, $i_k^{-}$ des Statorstromes bzw. der Statorspannung und aus dem Statorwiderstand R mit Hilfe von Gleichung (2) die Zeitableitung

$$\frac{d\Psi_k^-}{dt}$$

des Raumzeigers $\Psi_k^-$ des verketteten Statorflusses (Statorfluß-Raumzeiger) für den aktuellen Abtastschritt k berechnet und in einem Summierer 102 zu dem in einem Speicher 104 gespeicherten Wert der zeitlichen Ableitung

$$\frac{d\Psi_{k-1}^-}{dt}$$

des Statorfluß-Raumzeigers aus dem vorhergehenden Abtastschritt k - 1 addiert. Der auf diese Weise errechnete Summenwert wird in einer Multiplikationsstufe 106 mit der halben Abtastweite $\Delta t/2$ multipliziert. Zu diesem Wert wird ein in einem Ausgangswertspeicher 108 gespeicherter Ausgangswert $\Psi_{k-1}^{\angle}$ für den Statorfluß-Raumzeiger addiert und ausgegeben.

Der auf diese Weise errechnete ungefilterte Statorfluß-Raumzeiger $\hat{\Psi}_k^{\angle}$ wird in einer dritten Recheneinheit 12 mit dem Filterfaktor $\eta$ multipliziert und der so gewonnene gefilterte Statorfluß-Raumzeiger $\Psi_k^{\angle}$ wird in einer vierten Recheneinheit 14 gemäß Gleichung (7) durch Multiplikation mit dem gemäß Gleichung (8) bestimmten komplexen Korrekturfaktor $C^{\angle}$ sowie dem 1,5-fachen der Polpaarzahl p mit dem aktuellen Raumzeiger $i_k^{\angle}$ des Statorstromes verarbeitet.

Am Ausgang der vierten Recheneinheit 14 steht dann ein errechneter Wert für das aktuelle Drehmoment $m_k$ an, der als Istwert der Steuereinrichtung 4 zugeführt und dort zum Regeln oder Steuern des Drehmomentes m der Induktionsmaschine 2 verarbeitet werden kann. Vorteilhafterweise besteht dazu die Steuereinrichtung 4 aus Einheiten 4a und 4b, beispielsweise die Einheit 4a als Motorsteuergerät und die Eineit 4b als Regler 4b.

Der gefilterte Statorfluß-Raumzeiger $\Psi_k^{\angle}$ wird dem Ausgangswertspeicher 108 zugeführt und steht dann als Ausgangswert für den nächsten Rechenschritt k+1 zur Verfügung.

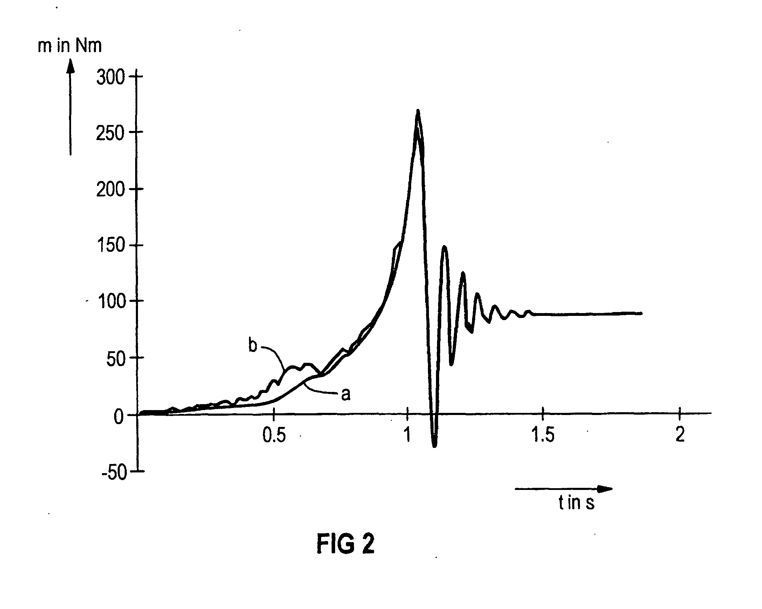

In FIG 2 ist in einem Drehmoment/Zeit-Diagramm das tatsächliche Drehmoment m entsprechend Kurve a und das nach der Erfindung bestimmte Drehmoment entsprechend Kurve b gegen die Zeit t aufgetragen. In der Figur ist zu erkennen, daß die in der Anlaufphase zunächst zunehmende Abweichung korrigiert wird, so daß ab etwa 0,7 Sekunden nach dem Beginn des Anlaufens der Unterschied zwischen dem tatsächlichen Drehmoment und dem berechneten Drehmoment praktisch vernachlässigbar ist. Durch die Berechnung des Drehmomentes gemäß der Erfindung ist es somit möglich, Fehler in Form bleibender oder zunehmender Abweichung des errechneten Drehmoments vom tatsächlichen Drehmoment praktisch vollständig zu vermeiden.

Mit der Erfindung ist erreicht, daß das Produkt aus dem komplexen Korrekturfaktor $C^{\angle}$ und dem numerisch berechneten Raumzeiger des verketteten Statorflusses auf die Grundwelle der Netzspannung bezogen asymptotisch dem exakten Wert des verketteten Statorflusses entspricht. Dies wird erreicht, indem der Korrekturfaktor so bemessen wird, daß die durch die Integrationsvorschrift und die Hochpaßfilterung erzeugten Verfälschungen asymptotisch verschwinden.

Zur Berechnung des komplexen Korrekturfaktor wird vorteilhafterweise die Z-Transformation angewendet:

Zunächst wird die Integrationsvorschrift Z-transformiert:

$$\Psi^{\angle}(z) = \eta \cdot \left[ \frac{\Psi^{\angle}(z)}{z} + \frac{\Delta t}{2} \cdot \left( \Xi^{\angle}(z) + \frac{\Xi^{\angle}(z)}{z} \right) \right] \qquad (11)$$

$$\Psi^{\angle}(z) \cdot (z-\eta) = \eta \cdot \frac{\Delta t}{2} \cdot \Xi^{\angle}(z) \cdot (z+1) \qquad (12)$$

$$\Psi^{\angle}(z) = \eta \cdot \frac{\Delta t}{2} \cdot \frac{z+1}{z-\eta} \cdot \Xi^{\angle}(z) \qquad (13)$$

Das Einsetzen der Z-Transformierten für $\Xi_k^{\angle}$ liefert:

$$Z\left\{\Xi_k^{\angle}\right\} = Z\{\exp(j \cdot \beta \cdot k)\} = \frac{z}{z - \exp(j \cdot \beta)} \tag{14}$$

$$\Psi^{\angle}(z) = \eta \cdot \frac{\Delta t}{2} \cdot \frac{z+1}{z-\eta} \cdot \frac{z}{z-\exp(j\cdot\beta)} \tag{15}$$

Im weiteren wird $\Psi^{\angle}(z)$ in Partialbrüche zerlegt.

$$\Psi^{\angle}(z) = \eta \cdot \frac{\Delta t}{2} \cdot \frac{1}{\exp(j \cdot \beta) - \eta} \cdot \left[ \frac{z \cdot (\exp(j \cdot \beta) + 1)}{z - \exp(j \cdot \beta)} - \frac{z \cdot (\eta + 1)}{z - \eta} \right] \tag{16}$$

Der zweite Term in der Klammer mit dem Nenner $(z-\eta)$ stellt nach der Rücktransformation eine Folge mit $\eta^k$ dar, die wegen $\eta<1$ für große k verschwindet. Der erste Term hingegen wird durch die Rücktransformation wieder in einen Raumzeiger der Form

$$\eta \cdot \frac{\Delta t}{2} \cdot \frac{\exp(j\cdot\beta)+1}{\exp(j\cdot\beta)-\eta} \cdot \exp(j\cdot\beta\cdot k) \tag{17}$$

umgewandelt. Der komplexe Korrekturfaktor $C^{\angle}$ muß nun so bemessen sein, daß der numerisch berechnete Raumzeiger der Flußverkettung für große k dem exakten Integral von $\Xi_k^{\angle}$, also $\frac{\exp(j\cdot\beta\cdot k)}{j\cdot\omega}$ entspricht.

Daraus folgt:

$$C^{\angle} \cdot \eta \cdot \frac{\Delta t}{2} \cdot \frac{\exp(j\cdot\beta)+1}{\exp(j\cdot\beta)-\eta} = \frac{1}{j\cdot\omega} \tag{18}$$

$$C^{\angle} = \frac{2\cdot[\exp(j\cdot\beta)-\eta]}{j\cdot\eta\cdot\beta\cdot[\exp(j\cdot\beta)+1]} \tag{19}$$

Durch weitere Umformungen, durch die ein reeller Nenner sowie getrennte Real- und Imaginärteile erzeugt werden, ergibt sich schließlich für den komplexen Korrekturfaktor die oben bereits angegebene Gleichung (8):

$$C^{\angle} = \frac{\frac{(\eta+1)\cdot\sin\beta}{\cos\beta+1}+j\cdot(\eta-1)}{\eta\cdot\beta} \text{ mit } \beta = \omega\cdot\Delta t$$

Der mit dem komplexen Korrekturfaktor $C^{\angle}$ multiplizierte, mittels obiger Integrationsvorschrift berechnete Raumzeiger der Flußverkettung $\Psi_k^{\angle}$ geht mit wachsendem k für die Grundwelle der Netzspannung asymptotisch in den exakten Wert über.

Der komplexen Korrekturfaktor $C^{\angle}$ muß nur einmal bei Kenntnis der Größen

- Kreisfrequenz der Grundwelle der Netzspannung $\omega$
- Filterfaktor $\eta$
- Abtastschrittweite $\Delta t$

berechnet werden und kann anschließend in einem ROM abgelegt werden. Zur Bestimmung des Drehmomentes während der Laufzeit ist lediglich eine komplexwertige Multiplikation vorzunehmen.

Werden andere Algorithmen zur Berechnung des Integrals oder der Hochpaß-Realisierung verwendet, ergeben sich zwangsläufig auch andere komplexe Korrekturfaktoren $C^{\angle}$. Diese können ebenso nach obiger Vorschrift berechnet werden.

In einem praxisgerechten Beispiel ergibt sich:

- Faktor der Hochpassfilterung η = 0,999
- Kreisfrequenz der Grundwelle der Netzspannung ω = 2*π*f = 314,159 s⁻¹
- Abtastschrittweite Δt: 100 µs

Daraus folgt der komplexe Korrekturfaktor:

$$C^{\angle} = 1,0005827965 - j*0,018628515$$

Bei Berechnung der Größen in einem Rechner lassen sich die exakten Vorgaben erfüllen.

**Patentansprüche**

1.  Verfahren zum Bestimmen des Drehmomentes ($m_k$) einer Induktionsmaschine (2), bei dem aus den Statorklemmenspannungen ($u_1$, $u_2$, $u_3$) und den Statorklemmenströmen ($i_1$, $i_2$, $i_3$) durch Integration und anschließende Hochpaßfilterung ein gefilterter und somit gleichanteilsfreier Raumzeiger ($\Psi_k^{\angle}$) des verketteten Statorflusses ermittelt wird, **dadurch gekennzeichnet, daß** der gefilterte Raumzeiger ($\Psi_k^{\angle}$) zur Korrektur der durch Integration und Hochpaßfilterung jeweils auf die Grundwelle der Netzfrequenz bezogenen Phasen- und Amplitudenfehler mit einem komplexen Korrekturfaktor ($C^{\angle}$) multipliziert wird und daß mittels des solchermaßen korrigierten Raumzeigers von der Induktionsmaschine abgegebene Drehmoment ($m_k$) berechnet wird.

2.  Verfahren nach Anspruch 1, **dadurch gekennzeichnet, daß** der komplexe Korrekturfaktor ($C^{\angle}$) so gewählt wird, daß das Produkt aus dem Korrekturfaktor ($C^{\angle}$) und einem numerisch berechneten Raumzeiger ($\Psi_k^{\angle}$) des verketteten Statorflusses auf die Grundwelle der Netzspannung bezogen asymptotisch dem exakten Wert entspricht.

3.  Verfahren nach Anspruch 2, **dadurch gekennzeichnet, daß** der Korrekturfaktor ($C^{\angle}$) so bemessen wird, daß die durch numerische Integration und Hochpaßfilterung erzeugten Verfälschungen asymptotisch verschwinden.

4.  Verfahren zum Bestimmen des Drehmomentes ($m_k$) einer Induktionsmaschine (2) nach Anspruch 1 oder einem der Ansprüche 2 bzw. 3, **gekennzeichnet durch** folgende Schritte:

    a) Die Statorklemmenspannungen ($u_1$,$u_2$,$u_3$) und die Statorklemmenströme ($i_1$,$i_2$,$i_3$) werden in vorgegebenen Zeitabschnitten (Δt) gemessen,
    b) aus den diskreten Meßwerten der Statorklemmenspannungen ($u_1$,$u_2$,$u_3$) und der Statorklemmenströme ($i_1$, $i_2$, $i_3$) werden der Raumzeiger ($\mathbf{u}_k^{\angle}$) der Statorspannung bzw. der Raumzeiger ($\mathbf{i}_k^{\angle}$) des Statorstromes berechnet,
    c) aus dem Raumzeiger ($\mathbf{u}_k^{\angle}$) der Statorspannung und dem Raumzeiger ($\mathbf{i}_k^{\angle}$) des Statorstromes und einem Ausgangswert ($\Psi_{k-1}^{\angle}$) für den Raumzeiger des verketteten Statorflusses wird **durch** numerische Integration ein ungefilterter Raumzeiger ($\Psi_k^{\angle}$) des verketteten Statorflusses ermittelt,
    d) der ungefilterte Raumzeiger ($\Psi_k^{\angle}$) des verketteten Statorflusses wird zur Hochpaßfilterung mit einem vorgegebenen Filterfaktor (η) multipliziert,
    e) der auf diese Weise ermittelte gefilterte Raumzeiger ($\Psi_k^{\angle}$) des verketteten Statorflusses wird als Ausgangswert ($\Psi_{k-1}^{\angle}$) für den Raumzeiger des verketteten Statorflusses für den folgenden numerischen Integrationsschritt verwendet und
    f) zur Berechnung des aktuellen Drehmomentes ($m_k$) der Induktionsmaschine (2) wird der gefilterte Raumzeiger ($\Psi_k^{\angle}$) mit dem komplexen Korrekturfaktor ($C^{\angle}$) multipliziert.

5.  Verfahren nach Anspruch 2, **dadurch gekennzeichnet, daß** der Filterfaktor (η) aus der Zeitdauer der Zeitabschnitte (Δt) und aus einer Filterzeitkonstante (τ) gemäß Gleichung

$$\eta = \exp\left(-\frac{\Delta t}{\tau}\right) \qquad\qquad (6)$$

ermittelt wird, wobei die Filterzeitkonstante (τ) das 1- bis 10-fache der Netzperiode beträgt.

**6.** Einrichtung zur Durchführung des Verfahrens nach einem der vorhergehenden Ansprüche, mit einer Meßeinrichtung (6) zum Erfassen der Statorklemmenspannungen ($u_1$, $u_2$ $u_3$) und der Statorklemmenströme ($i_1$, $i_2$, $i_3$), und mit einer Recheneinrichtung (8,10,12,14) zur Ermittlung eines gefilterten Raumzeigers ($\Psi_k^{\angle}$) des verketteten Statorflusses, **dadurch gekennzeichnet, daß** die Recheneinrichtung zur Multiplikation des gefilterten Raumzeigers ($\Psi_k^{\angle}$) mit einem komplexen Korrekturfaktor ($C^{\angle}$) und zum Berechnen des Drehmomentes ($m_k$) aus dem mit dem komplexen Korrekturfaktor ($C^{\angle}$) multiplizierten gefilterten Raumzeiger ($\Psi_k^{\angle}$) ausgebildet ist.

**7.** Einrichtung nach Anspruch 6, **dadurch gekennzeichnet, daß** der komplexe Korrekturfaktor ($C^{\angle}$) lautet:

$$C^{\angle} = \frac{\frac{(\eta+1)\cdot\sin\beta}{\cos\beta+1}+j\cdot(\eta-1)}{\eta\cdot\beta}\text{mit } \beta = \omega\cdot\Delta t \tag{8}$$

wobei für die Integration und die Hochpaßfilterung folgende Nebenbedingungen gelten:

$$\Psi_k^{\angle} = \eta\cdot\left[\Psi_{k-1}^{\angle} + \frac{\Delta t}{2}\cdot\left(\frac{d\Psi_k^{\angle}}{dt} + \frac{d\Psi_{k-1}^{\angle}}{dt}\right)\right] \tag{5}$$

$$\eta = \exp\left(-\frac{\Delta t}{\tau}\right) \tag{6}$$

mit $\tau$ = Filterzeitkonstante.

**8.** Einrichtung nach Anspruch 6, **dadurch gekennzeichnet, daß** die Recheneinrichtung eine erste Recheneinheit (8) zum Berechnen des Raumzeigers ($u_k^{\angle}$) der Statorspannung und des Raumzeigers ($i_k^{\angle}$) des Statorstromes, eine zweite Recheneinheit (10) zur Berechnung des ungefilterten Raumzeigers ($\Psi_k^{\angle}$) des verketteten Statorflusses durch numerische Integration aus den Raumzeigern ($u_k^{\angle}$,$i_k^{\angle}$), der Statorspannung und des Statorstromes und aus einem in einem Ausgangswertspeicher (108) gespeicherten Ausgangswert ($\Psi_{k-1}^{\angle}$) für den Raumzeiger des verketteten Statorflusses, eine dieser nachgeschaltete dritte Recheneinheit (12) zur Berechnung eines gefilterten Raumzeigers ($\Psi_k^{\angle}$) des verketteten Statorflusses durch Multiplikation des ungefilterten Raumzeigers ($\Psi_k^{\angle}$) des verketteten Statorflusses mit einem Filterfaktor ($\eta$), und eine vierte Recheneinheit (14) zum Berechnen des Drehmoments ($m_k$) aus dem Raumzeiger ($i_k^{\angle}$) des Statorstroms, dem gefilterten Raumzeiger ($\Psi_k^{\angle}$) des verketteten Statorflusses, der Polpaarzahl (p) und einem Korrekturfaktor ($C^{\angle}$) enthält, wobei der gefilterte Raumzeiger ($\Psi_k^{\angle}$) des verketteten Statorflusses an den Eingang des Ausgangswertspeichers (108) geführt ist.

**9.** Einrichtung nach Anspruch 8, **dadurch gekennzeichnet, daß** eine Steuereinrichtung (4) zum Steuern des Drehmomentes der Induktionsmaschine (2) in Abhängigkeit vom am Ausgang der vierten Recheneinrichtung (14) anstehenden Istwert für das Drehmoment ($m_k$) vorhanden ist.

**Claims**

**1.** Method for determining the torque ($m_k$) of an induction machine (2), in the stator terminal voltages ($u_1$, $u_2$, $u_3$) and the stator terminal currents ($i_1$, $i_2$, $i_3$) are used, by means of integration and subsequent high-pass filtering, to determine a filtered space vector ($\Psi_k^{\angle}$) from which the DC component has been removed, of the concatenated stator flux, **characterized in that** the filtered space vector ($\Psi_k^{\angle}$) is multiplied by a complex correction factor ($C^{\angle}$) to correct the phase and amplitude errors caused by integration and high-pass filtering and related to the fundamental of the mains frequency in each case and that the torque ($m_k$) produced by the induction machine is calculated by the space vector corrected in such a way

**2.** Method according to Claim 1, **characterized in that** the complex correction factor ($C^{\angle}$) is chosen so that the product of the correction factor ($C^\angle$) and a numerically calculated space vector ($\Psi_k^\angle$) of the concatenated stator flux corresponds asymptotically to the exact value relative to the fundamental of the power supply voltage.

**3.** Method according to Claim 2, **characterized in that** the correction factor ($C^\angle$) is dimensioned so that the corruptions caused by numerical integration and high-pass filtering disappear asymptotically.

**4.** Method for determining the torque ($m_k$) of an induction machine (2) in accordance with Claim 1 or with one of Claims 2 or 3, **characterized by** the following steps:

a) the stator terminal voltages ($u_1$, $u_2$, $u_3$) and the stator terminal currents ($i_1$, $i_2$, $i_3$) are measured at specified intervals ($\Delta t$),

from the discrete measured values of the stator terminal voltages ($u_1$, $u_2$, $u_3$) and the stator terminal currents ($i_1$, $i_2$, $i_3$) the space vector ($u_k^\angle$) of the stator voltage or the space vector ($i_k^\angle$) of the stator current are calculated,

c) an unfiltered space vector ($\psi_k^\angle$) of the concatenated stator flux is determined from the space vector ($\mu_k^\angle$) of the stator voltage or the space vector ($i_k^\angle$) of the stator current and an initial value ($\psi_{k-1}^\angle$) for the space vector of the concatenated stator flux,

d) the unfiltered space vector ($\psi_k^\angle$) of the concatenated stator flux is used for high-pass filtering, multiplied by a predetermined filter factor ($\eta$),

e) the filtered space vector ($\psi_k^\angle$) of the concatenated stator flux determined in this way is used as the initial value ($\psi_{k-1}^\angle$) for the space vector of the concatenated stator flux for the following numerical integration step and

f) to calculate the current torque ($m_k$) of the induction machine (2) the filtered space vector ($\psi_k^\angle$) is multiplied by the complex correction factor ($C^\angle$).

**5.** Method in accordance with Claim 2, **characterized in that** the filter factor ($\eta$) is determined from the duration of the time sections ($\Delta t$) and from a filter time constant ($\tau$) in accordance with the equation

$$\eta = \exp\left(-\tfrac{\Delta t}{\tau}\right) \qquad\qquad (6)$$

whereby the filter time constant ($\tau$) is between 1 and 10 times the mains period.

**6.** Device for performing the procedure in accordance with one of the above Claims, with a measuring device (6) to record the stator terminal voltages ($u_1$, $u_2$, $u_3$) and the stator terminal currents ($i_1$, $i_2$, $i_3$) and with a computation device (8,10,12,14) to determine a filtered space vector ($\psi_k^\angle$) of the concatenated stator flux, **characterized in that** the computation device for multiplying the filtered space vector ($\psi_k^\angle$) is mapped with a complex correction factor ($C^\angle$) and for calculating the torque ($m_k$) from the filtered space vector ($\psi_k^\angle$) multiplied by the complex correction factor ($C^\angle$).

**7.** Device in accordance with Claim 6, **characterized in that** the complex correction factor ($C^\angle$) is:

$$C^\angle = \frac{\dfrac{(\eta+1)\cdot\sin\beta}{\cos\beta+1}+j\cdot(\eta-1)}{\eta\cdot\beta}\ \text{mit}\ \beta = \omega\cdot\Delta t \qquad (8)$$

whereby the following ancillary conditions apply to integration und high-pass filtering:

$$\left\|\Psi_k^\angle = \eta\cdot\left[\Psi_{k-1}^\angle + \frac{\Delta t}{2}\cdot\left(\frac{d\Psi_k^\angle}{dt}+\frac{d\Psi_{k-1}^\angle}{dt}\right)\right]\right\| \qquad (5)$$

$$\eta = \exp\left(-\frac{\Delta t}{\tau}\right) \tag{6}$$

with $\tau$ = filter time constant

8. device in accordance with Claim 6, **characterized in that** the computation device includes a first computation unit (8) to calculate the space vector ($u_k^{\angle}$) of the stator voltage and the space vector ($i_k^{\angle}$) of the stator current, a second computation unit (10) to calculate the unfiltered space vector ($\hat{\psi}_k^{\angle}$) of the concatenated stator flux by numerical integration form the space vectors ($u_k^{\angle}, i_k^{\angle}$) of the stator voltage and the stator current and a output value ($\psi_{k-1}^{\angle}$) stored in an output value memory (108) for the space vector of the concatenated stator flux, third computation unit (12) connected downstream from this, for calculating a filtered space vector ($\psi_k^{\angle}$) of the concatenated stator flux by multiplication of the unfiltered space vector ($\hat{\psi}_k^{\angle}$) of the concatenated stator flux, and a fourth computation unit (14) to calculate the torque ($m_k$) from the space vector ($i_k^{\angle}$) of the stator current, the filtered space vector ($\psi_k^{\angle}$) of the concatenated stator flux, the number of pole pairs (p) and a correction factor ($C^{\angle}$) in which case the filtered space vector ($\psi_k^{\angle}$) of the concatenated stator flux is routed to the input of the output value memory.

9. Device in accordance with Claim 8, **characterized in that** a control unit (4) to control the torque of the induction machine (2) is available depending on the current value present at the output of the fourth computation unit (14) is for torque ($m_k$).

**Revendications**

1. Procédé pour déterminer le couple ($m_k$) d'une machine à induction (2), dans lequel on détermine un vecteur spatial ($\Psi_k^{\angle}$), filtré et donc exempt de composante continue, du flux statorique enchaîné à partir des tensions ($u_1, u_2, u_3$) aux bornes du stator et des courants ($i_1, i_2, i_3$) de bornes du stator au moyen d'une intégration puis d'un filtrage passe-haut, **caractérisé par le fait qu'**on multiplie le vecteur spatial filtré ($\Psi_k^{\angle}$) par un facteur correcteur complexe ($C^{\angle}$) afin de corriger les erreurs de phase et d'amplitude dues à l'intégration et au filtrage passe-haut à chaque fois par rapport à l'onde fondamentale de la fréquence de réseau et qu'on calcule le couple ($m_k$) délivré par la machine à induction au moyen du vecteur spatial ainsi corrigé.

2. Procédé selon la revendication 1, **caractérisé par le fait qu'**on choisit le facteur correcteur complexe ($C^{\angle}$) de telle sorte que le produit du facteur correcteur ($C^{\angle}$) et d'un vecteur spatial calculé numériquement ($\hat{\Psi}_k^{\angle}$) du flux statorique enchaîné, par rapport à l'onde fondamentale de la tension de réseau, correspond asymptotiquement à la valeur exacte.

3. Procédé selon la revendication 2, **caractérisé par le fait qu'**on dimensionne le facteur correcteur ($C^{\angle}$) de telle sorte que les altérations produites par l'intégration numérique et par le filtrage passe-haut disparaissent asymptotiquement.

4. Procédé pour déterminer le couple ($m_k$) d'une machine à induction (2) selon la revendication 1 ou selon l'une des revendications 2 ou 3,
   **caractérisé par** les étapes suivantes :

   a) on mesure les tensions ($u_1, u_2, u_3$) et les courants ($i_1, i_2, i_3$) aux bornes du stator dans des intervalles de temps ($\Delta t$) prédéterminés,
   b) à partir des valeurs mesurées discrètes des tensions ($u_1, u_2, u_3$) et des courants ($i_1, i_2, i_3$) aux bornes du stator, on calcule le vecteur spatial ($u_k^{\angle}$) de la tension statorique respectivement le vecteur spatial ($i_k^{\angle}$) du courant statorique,
   c) à partir du vecteur spatial ($u_k^{\angle}$) de la tension statorique et du vecteur spatial ($i_k^{\angle}$) du courant statorique ainsi que d'une valeur initiale ($\Psi_{k-1}^{\angle}$) pour le vecteur spatial du flux statorique enchaîné, on détermine par intégration numérique un vecteur spatial non filtré ($\hat{\Psi}_k^{\angle}$) du flux statorique enchaîné,
   d) pour le filtrage passe-haut, on multiplie le vecteur spatial non filtré ($\hat{\Psi}_k^{\angle}$) du flux statorique enchaîné par un coefficient de filtrage ($\eta$) prédéterminé,
   e) on utilise le vecteur spatial filtré ($\Psi_k^{\angle}$) déterminé de cette manière du flux statorique enchaîné comme valeur

initiale ($\Psi^{\angle}_{k-1}$) pour la prochaine étape d'intégration numérique, et

f ) pour le calcul du couple actuel ($m_k$) de la machine à induction (2), on multiplie le vecteur spatial filtré ($\Psi^{\angle}_k$) par le facteur correcteur complexe ($C^{\angle}$).

**5.** Procédé selon la revendication 2, **caractérisé par le fait qu'**on détermine le coefficient de filtrage ($\eta$) à partir de la durée des intervalles de temps ($\Delta t$) et d'une constante de temps de filtrage ($\tau$) selon la relation

$$\eta = \exp\left(-\frac{\Delta t}{\tau}\right) \tag{6}$$

la constante de temps de filtrage ($\tau$) étant égale à 1 à 10 fois la période de réseau.

**6.** Dispositif pour la mise en oeuvre du procédé selon l'une des revendications précédentes, comportant un dispositif de mesure (6) pour la détection des tensions ($u_1$, $u_2$, $u_3$) et des courants ($i_1$, $i_2$, $i_3$) aux bornes du stator et un dispositif de calcul (8, 10, 12, 14) pour la détermination d'un vecteur spatial filtré ($\Psi^{\angle}_k$) du flux statorique enchaîné, **caractérisé par le fait que** le dispositif de calcul est conçu pour la multiplication du vecteur spatial filtré ($\Psi^{\angle}_k$) par un facteur correcteur complexe ($C^{\angle}$) et pour le calcul du couple ($m_k$) à partir du vecteur spatial filtré ($\Psi^{\angle}_k$) multiplié par le facteur correcteur complexe ($C^{\angle}$).

**7.** Dispositif selon la revendication 6, **caractérisé par le fait que** le facteur correcteur complexe ($C^{\angle}$) est :

$$C^{\angle} = \frac{\frac{(\eta+1)\cdot\sin\beta}{\cos\beta+1}+j\cdot(\eta-1)}{\eta\cdot\beta} \text{ mit } \beta = \omega\cdot\Delta t \tag{8}$$

avec les conditions secondaires suivantes pour l'intégration et le filtrage passe-haut :

$$\Psi^{\angle}_k = \eta \cdot \left[\Psi^{\angle}_{k-1} + \frac{\Delta t}{2} \cdot \left(\frac{d\Psi^{\angle}_k}{dt} + \frac{d\Psi^{\angle}_{k-1}}{dt}\right)\right] \tag{5}$$

$$\eta = \exp\left(-\frac{\Delta t}{\tau}\right) \tag{6}$$

avec $\tau$ = constante de temps de filtrage.

**8.** Dispositif selon la revendication 6, **caractérisé par le fait que** le dispositif de calcul contient une première unité de calcul (8) pour le calcul du vecteur spatial ($u^{\angle}_k$) de la tension statorique et du vecteur spatial ($i^{\angle}_k$) du courant statorique, une deuxième unité de calcul (10) pour le calcul du vecteur spatial non filtré ($\Psi^{\angle}_k$) du flux statorique enchaîné par intégration numérique à partir des vecteurs spatiaux ($u^{\angle}_k$, $i^{\angle}_k$) de la tension statorique et du courant statorique et à partir d'une valeur initiale ($\Psi^{\angle}_{k-1}$) mémorisée dans une mémoire de valeur initiale (108) pour le vecteur spatial du flux statorique enchaîné, une troisième unité de calcul (12) placée du côté aval pour le calcul d'un vecteur spatial filtré ($\Psi^{\angle}_k$) du flux statorique enchaîné par multiplication du vecteur spatial non filtré ($\Psi^{\angle}_k$) du flux statorique enchaîné par un coefficient de filtrage ($\eta$) (14) pour le et une quatrième unité de calcul calcul du couple ($m_k$) à partir du vecteur spatial ($i^{\angle}_k$) du courant statorique, du vecteur spatial filtré ($\Psi^{\angle}_k$) du flux statorique enchaîné, du nombre de paires de pôles (p) et d'un facteur correcteur ($C^{\angle}$), le vecteur spatial filtré ($\Psi^{\angle}_k$) du flux statorique enchaîné étant envoyé à l'entrée de la mémoire de valeur initiale (108).

**9.** Dispositif selon la revendication 8, **caractérisé par le fait qu'**un dispositif de commande (4) est prévu pour commander le couple de la machine à induction (2) en fonction de la valeur réelle présente à la sortie de la quatrième unité de calcul (14) pour le couple ($m_k$).

FIG 1

**FIG 2**